# EUROPEAN PATENT APPLICATION

(11) **EP 2 161 862 A1**
(43) Date of publication of application: **10.03.2010**
(21) Application number: 08764164.3
(22) Date of filing: 18.06.2008
(51) Int. Cl.: H04H 20/57, H04H 60/42

(54) **RADIO TRANSMISSION METHOD, RADIO RECEPTION METHOD, RADIO TRANSMISSION/RECEPTION METHOD, RADIO TRANSMISSION DEVICE, RADIO RECEPTION DEVICE, RADIO TRANSMISSION/RECEPTION SYSTEM, BASE STATION DEVICE, AND COMMUNICATION TERMINAL DEVICE**

(30) Priority: 19.06.2007 JP 2007161069; 31.03.2008 JP 2008089890
(71) Applicant: Panasonic Corporation, Kadoma-shi Osaka 571-8501 (JP)
(72) Inventor: ISHIDA, Chie, Osaka-shi, Osaka 540-6207 (JP); AOYAMA, Takahisa, Osaka-shi, Osaka 540-6207 (JP); HIRANO, Jun, Osaka-shi, Osaka 540-6207 (JP)
(74) Representative: Grünecker, Kinkeldey, Stockmair & Schwanhäusser Anwaltssozietät
(86) International application number: PCT/JP2008/001581
(87) International publication number: WO 2008/155915

(57) **Abstract**

A radio communication base station apparatus, a radio communication terminal, and radio transmission and reception methods for a terminal to efficiently acquire the service status of the neighbor-cell before the terminal makes a cell change are provided. A subarea ID storage section 107 stores a subarea identifier. An MIB generator 102 generates a master information block including scheduling information of a scheduling block and the subarea identifier of the subarea to which the own cell belongs, and transmits the master information block from an MIB transmitter 108. An MBMS SB generator 104 generates the scheduling block including the identifier of the subarea where the broadcast or multicast service is provided, and transmits the scheduling block from an MBMS SB transmitter 109.

## Description

### Technical Field

This invention relates to a technical field of radio communications and in particular to a radio communication base station apparatus, a radio communication terminal, a radio transmission method, and a radio reception method for performing Multimedia Broadcast/Multicast Service (MBMS).

### Background Art

In the field of mobile communications, in recent years, technical studies concerning Multimedia Broadcast/Multicast Service (MBMS) of broadcast service or multicast service has been conducted. The MBMS is one-to-multipoint communications rather than one-to-one communications; one base station apparatus transmits the same data (for example, music data, video image data, etc.,) to a plurality of terminals at the same time.

The advantages of the MBMS are as follows: When each communication terminal uses one individual channel to receive information transmitted from a base station apparatus in streaming service, etc., if the number of communication terminals to receive the information increases, the load on the radio line becomes large. When the MBMS is used, however, if the number of communication terminals increases, all the communication terminals use the same channel to receive information, so that the number of communication terminals that can receive information can be increased without increasing the load on the radio channel. At present, distribution of traffic information, music distribution, news distribution at a station, sportscast distribution, and the like are considered as services using the MBMS.

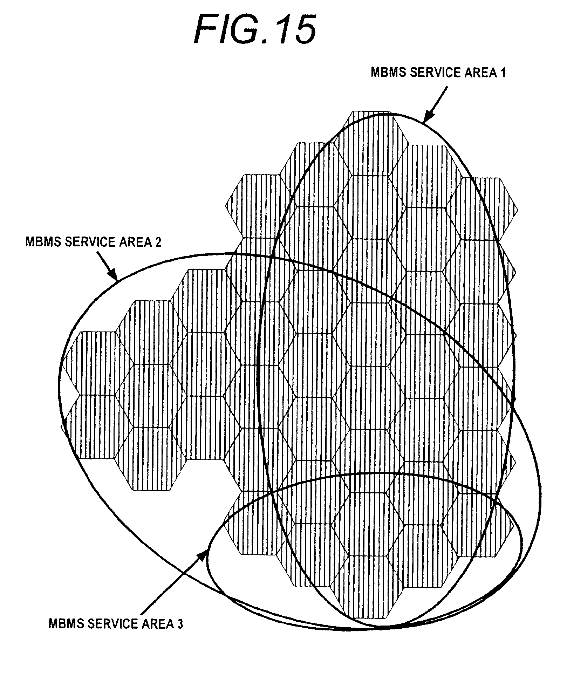

Next, an MBMS service area of an area where common service is provided will be discussed with FIG. 15. As shown in FIG. 15, the MBMS service area is implemented as a set of cells. Each hexagon in FIG. 15 represents a cell. Common MBMS service is provided in the MBMS service area (the number of MBMS services in one MBMS service area may be one or may be two or more). In the MBMS service area, SFN combining (Single Frequency Network combining) for transmitting the same data with the timing matched in a plurality of base stations in the area is performed. Data transmitted at the same timing is mixed on radio and arrives at each terminal; in an OFDM communication system, combining would be possible without mutual interference within the time period of a guard interval (GI). Even at a terminal at a position where a radio wave from the own base station is weak such as a cell edge receives data combined with a signal from a neighbor base station, so that the MBMS data can be distributed efficiently to the whole area by the SFN combining. The MBMS service area is the range in which common MBMS service is distributed. In the example in FIG. 15, different MBMS services are provided in MBMS service areas 1, 2, and 3, respectively. A cell where the MBMS service areas overlap can receive the MBMS services provided in all the overlap MBMS service areas. For example, assume that news program 1 and music distribution service are provided in MBMS service area 1, that news program 2 and a sports program are provided in MBMS service area 2, and that traffic information is provided in MBMS service area 3. In the overlap portion of MBMS service areas 1 and 2, news programs 1 and 2, the music distribution service, and the sports program can be received. Each cell positioned in the overlap portion of MBMS service areas 1, 2, and 3 can receive all MBMS services provided in the three MBMS service areas.

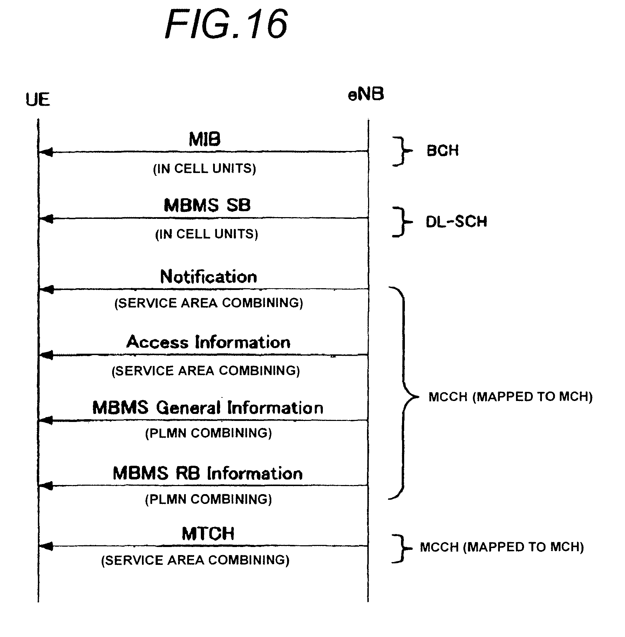

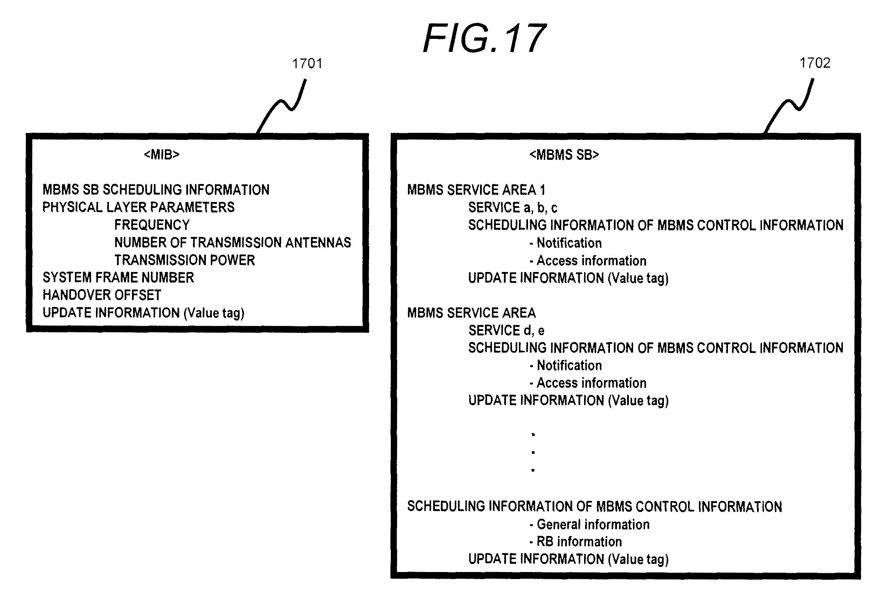

A reception procedure of control information required for a terminal to receive MBMS service will be discussed with FIG. 16. First, the terminal receives a master information block (MIB) of broadcast information through a broadcast channel (BCH). The MIB is broadcast information first received by the terminal and is a message containing parameters concerning a physical layer, scheduling information of next information to be received, etc. Next, the terminal receives an MSMS scheduling block (MBMS Scheduling Block (MBMS SB)) of a message for carrying scheduling information of control information of MBMS through a downlink shared channel (DL-SCH)). FIG. 17 shows the message constructions of MIB and MBMS SB. The MBMS SB contains the ID of each MBMS service area to which the cell belongs, the IDs of the provided MBMS services, scheduling information of control information of MBMS required for settings, etc., to receive the MBMS services, and the like.

The terminal receives notification information (Notification), Access Information, MBMS General Information, MBMS Radio Bearer Information (MBMS RB information) in order through an MBMS point-to-multipoint control channel (MCCH). Then, the terminal receives MBMS content through an MBMS point-to-multipoint traffic channel (MCTH).

To use individual MBMS SBs for all MBMS service areas, the terminal needs to read a plurality of MBMS SBs and thus the operation becomes complicated. Thus, it is effective to use a common MBMS SB for all MBMS service areas. In this case, however, MBMS SB needs to be transmitted in cell units because each cell belongs to a different MBMS service area. Considering that information concerning service such as Notification and Access Information is common to all MBMS service areas and thus can be transmitted so as to be able to be combined in MBMS service area units and that MBMS General Information and MBMS RB information are setup information of frequency, timer, and radio bearer (RB) and thus can be transmitted so as to be able to be combined at the level of network (PublicLand Mobile Network (PLMN)) set by an operator, it is said that the transmission operation of only MBMS SB in cell units is inefficient.

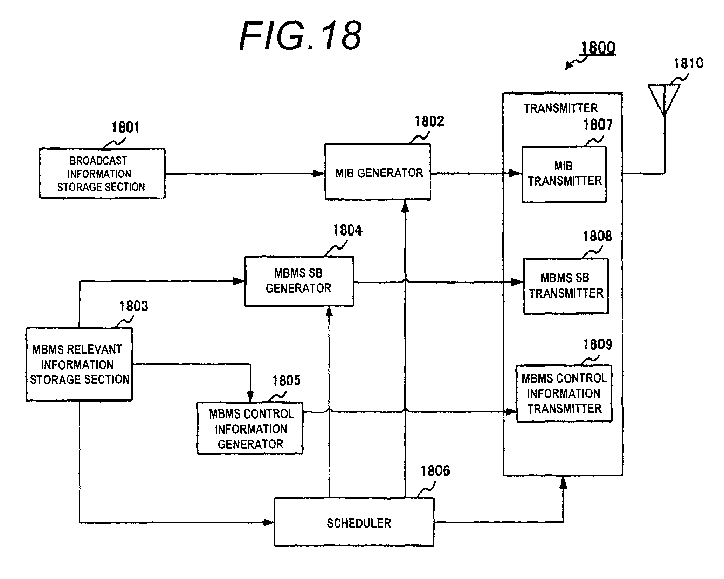

The configuration of a base station apparatus 1800 according to the background art of the invention will be discussed with a block diagram of FIG. 18.

A broadcast information storage section 1801 stores information relevant to MIB and outputs the stored MIB relevant information to an MIB generator 1802.

An MBMS relevant information storage section 1803 stores information relevant to MBMS, such as MBMS service area ID, MBMS service ID, and MBMS control information relevant information and outputs the stored information of MBMS service area ID, MBMS service ID, etc., to an MBMS SB generator 1804 and the MBMS control information relevant information, etc., to an MBMS control information generator 1805. It also outputs information of the data size, etc., of MBMS control information to a scheduler 1806.

The MBMS control information generator 1805 generates MBMS control information based on the MBMS control information relevant information output from the MBMS relevant information storage section 1803 and outputs the generated MBMS control information to an MBMS control information transmitter 1809.

The MBMS SB generator 1804 generates MBMS SB based on the MBMS relevant information output from the MBMS relevant information storage section 1803 and scheduling information output from the scheduler 1806, and outputs the generated MBMS SB to an MBMS SB transmitter 1808.

The MIB generator 1802 generates MIB based on the MIB relevant information output from the broadcast information storage section 1801 and MBMS SB scheduling information output from the scheduler 1806, and outputs the generated MIB to an MIB transmitter 1807.

The scheduler 1806 acquires the information of the data size, etc., of MBMS control information output from the MBMS relevant information storage section 1803 and determines scheduling information of MBMS control information based on the information. The determined scheduling information of MBMS control information is output to the MBMS SB generator 1804. The MBMS SB scheduling information is output to the MIB generator 802 and the MBMS SB transmitter 1808, and the MIB scheduling information is output to the MIB transmitter 1807.

The MIB transmitter 1807 transmits the MIB output from the MIB generator 1802 in accordance with the scheduling information output from the scheduler 1806. The MBMS SB transmitter 1808 transmits the MBMS SB output from the MBMS SB generator 1804 in accordance with the scheduling information output from the scheduler 1806. The MBMS control information transmitter 1809 transmits the MBMS control information output from the MBMS control information generator 1805 in accordance with the scheduling information output from the scheduler 1806.

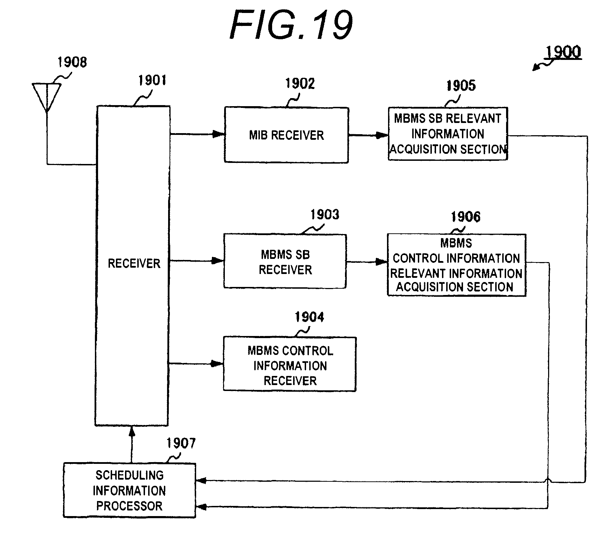

Next, the configuration of a terminal 1900 according to the background art of the invention will be discussed with a block diagram of FIG. 19.

A receiver 1901 receives a signal from a base station and outputs MIB, MBMS SB, and MBMS control information of the received signal to an MIB receiver 1902, an MBMS SB receiver 1903, and an MBMS control information receiver 1904 respectively.

The MIB receiver 1902 receives the MIB output from the receiver 1901 and outputs MBMS SB scheduling information, etc., to an MBMS SB relevant information acquisition section 1905.

The MBMS SB receiver 1903 receives the MBMS SB output from the receiver 1901 and outputs scheduling information, etc., of MBMS control information to an MBMS control information relevant information acquisition section 1906.

The MBMS control information receiver 1904 receives the MBMS control information output from the receiver 1901.

The MBMS SB relevant information acquisition section 1905 outputs the MBMS SB scheduling information to a scheduler 1907 from the MBMS SB relevant information output from the MIB receiver 1902.

The MBMS control information relevant information acquisition section 1906 outputs the scheduling information of MBMS control information to the scheduler 1907 from the MBMS control information relevant information output from the MBMS SB receiver 1903.

The scheduler 1907 determines the reception schedule of the terminal based on the MBMSSB scheduling information output from the MBMS SB relevant information acquisition section 1905 and the scheduling information of MBMS control information output from the MBMS control information relevant information acquisition section 1906. The determined reception schedule is output to the receiver 1901.

Non-patent literature 1: 3rd Generation Partnership Project, 3GPP TS 25.331 V7.4.0 (3rd Generation Partnership Project; Technical Specification Group Radio AccessNetwork; Radio Resource Control (RRC); Protocol Specification (Release 7), April, 2007, Internet <URL: http://www.3gpp.org>

### Disclosure of the Invention

### Problems to be Solved by the Invention

However, the related art described above involves a problem in that it cannot perform SFN combining of MBMS SB of information required for acquiring MBMS control information.

When a terminal in an idle mode switches the base station with a change of a cell (cell reselection), there is a possibility that the service received in the previous cell may be unprovided in the cell which the terminal moves to. To know service provided in each cell, the terminal must receive MBMS SB. However, the terminal is in the current cell and can receive only MIB of a neighbor-cell; to receive more information, the terminal must acquire an L1/L2 signaling channel indicating that information address to whom is entered at which position of a subframe. However, to receive the L1/L2 signaling channel of a neighbor-cell and know whether or not the currently received service can also be continuously received in the neighbor-cell before cell reselection, the operation of the terminal becomes complicated and thus there is a problem of inefficiency.

It is an object of the invention to provide a radio communication base station apparatus, a radio communication terminal, and radio transmission and reception methods for a terminal to efficiently acquire the service status of the neighbor-cell before the terminal makes cell change.

### Means for Solving the Problems

According to the present invention, there is provided a radio transmission apparatus including a radio transmitter for providing broadcast service or multicast service for one or more mobile terminals in a service area including one or more cells, wherein the service area is divided into one or more subareas, and a subarea identifier is assigned to each of the subareas, the radio transmission apparatus including: a master information block transmitter for transmitting a master information block including scheduling information of a scheduling block and the subarea identifier of the subarea to which the own cell belongs; and a scheduling block transmitter for transmitting the scheduling block including the identifier of the subarea where the broadcast service or the multicast service is provided.

### Advantages of the Invention

According to the radio communication base station apparatus, the radio communication terminal, and the radio transmission and reception methods according to the invention, the service status of the neighbor-cell is efficiently acquired before a cell change, thereby aiding in circumventing of the risk of making it impossible to continue the service after a cell change.

Further, the control information and the scheduling information for receiving MBMS service can be transmitted so that they can be subjected to SFN combining as much as possible, so that the reception efficiency of the terminal improves.

### Brief Description of the Drawings

FIG. 1 is a block diagram to show the configuration of a base station apparatus according to Embodiment 1 of the invention.
FIG. 2 is a block diagram to show the configuration of a terminal according to Embodiment 1 of the invention.
FIG. 3 is a configuration diagram of a network according to Embodiment 1 of the invention.
FIG. 4 shows a placement example of MBMS service areas and MBMS subareas according to Embodiment 1 of the invention.
FIG. 5 shows a message construction of MIB and MBMS SB according to Embodiment 1 of the invention.
FIG. 6 shows a reception procedure of MBMS relevant information in the terminal according to Embodiment 1 of the invention.
FIG. 7 is a flowchart to show the operation to MBMS control information reception in the terminal according to Embodiment 1 of the invention.
FIG. 8 is a flowchart to show operation of MBMS subarea ID determination of a neighbor-cell in the terminal according to Embodiment 1 of the invention.
FIG. 9 is a block diagram to show the configuration of a terminal according to Embodiment 2 of the invention.
FIG. 10 shows a message construction of the message construction of neighbor MBMS subarea information according to Embodiment 3 of the invention.
FIG. 11 shows a reception procedure of MBMS relevant information in the terminal according to Embodiment 3 of the invention.
FIG. 12 is a block diagram to show the configuration of a base station apparatus according to Embodiment 3 of the invention.
FIG. 13 is a block diagram to show the configuration of a terminal according to Embodiment 3 of the invention.
FIG. 14 describes a signaling flow of a base station apparatus and a terminal at the counting time according to Embodiment 4 of the invention.
FIG. 15 shows a placement example of MBMS service areas according to a related art.
FIG. 16 shows a reception procedure of MBMS relevant information of a terminal according to the related art.
FIG. 17 is a message construction drawing of MIB and MBMS SB according to the related art.
FIG. 18 is a block diagram to show the configuration of a base station apparatus according to the related art.
FIG. 19 is a block diagram to show the configuration of a terminal according to the related art.
FIG. 20 is an area conceptual diagram of macrocells and indoor cells according to Embodiment 5 of the invention.
FIG. 21 is a block diagram to show the configuration of an indoor base station apparatus according to Embodiment 5 of the invention.
FIG. 22 is a block diagram to show the configuration of a terminal according to Embodiment 5 of the invention.
FIG. 23 is a sequence chart of the indoor base station apparatus and the terminal according to Embodiment 5 of the invention.
FIG. 24 is a flowchart to show the operation to reception of MBMS data in an indoor area in the terminal according to Embodiment 5 of the invention.
FIG. 25 is a block diagram to show the configuration of a terminal according to Embodiment 6 of the invention.

### Description of Reference Numerals

- 101: Broadcast information storage section
- 102: MIB generator
- 103: MBMS relevant information storage section
- 104: MBMS SB generator
- 105: MBMS control information generator
- 106: Scheduler
- 107: Subarea ID storage section
- 108: MIB transmitter
- 109: MBMS SB transmitter
- 110: MBMS control information transmitter
- 111: Antenna

### Best Mode for Carrying out the Invention

Embodiments of the invention will be discussed below in detail with reference to the accompanying drawings: In the embodiments, however, components having the same function are denoted by the same reference numeral and will not be discussed again.

The embodiments will be discussed based on third-generation mobile communication system, 3.5-generation mobile communication system, particularly 3.9-generation mobile communication system (3GPP LTE (Long Term Evolution), etc.,), but the invention is not limited to the systems and can also be applied to any mobile communication system of fourth-generation mobile communication system (IMT-Advanced, etc.,), a wireless LAN, etc.

### (Embodiment 1)

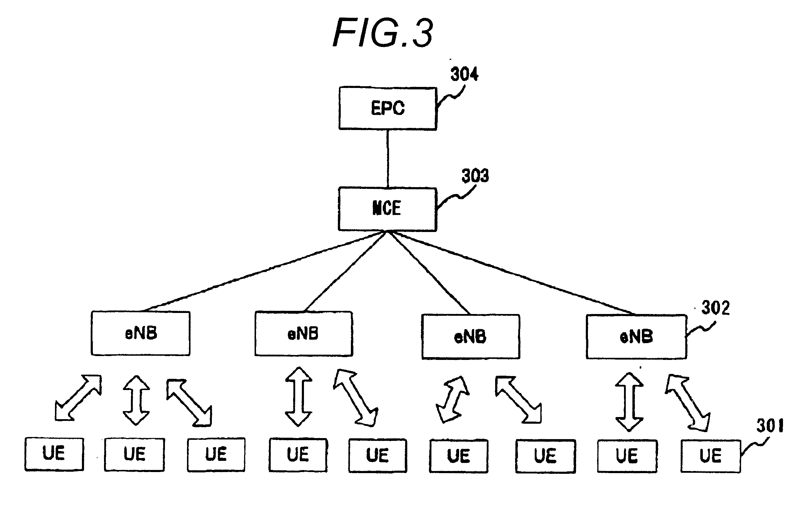

FIG. 3 shows the configuration of a network according to Embodiment 1. The network shown in FIG. 3 includes terminals (User Equipment, UE) 301, radio base station apparatus (Evolved NodeB, eNB) 302, MBMS controllers (MBMS Control Entity, MCE) 303, and a core network (Evolved Packet Core, EPC) 304.

The base station apparatus 302 allocates and manages radio resources and takes charge of a role of an access point of a radio access network for UE 301. The base station apparatus 302 receives information transferred from UE 301 through an uplink and transfers data to UE 301 through a downlink.

The MCE 303 manages a plurality of base station apparatus 302 and allocates a physical resource block to MBMS service. The EPC 304 is a trunk of the mobile communication network and performs distribution of MBMS content, control of MBMS data and a session, etc.

In Embodiment 1, each MBMS service area is divided into a plurality of areas, thereby making it possible to transmit MBMS SB so that MBMS SB can be subjected to SFN combining.

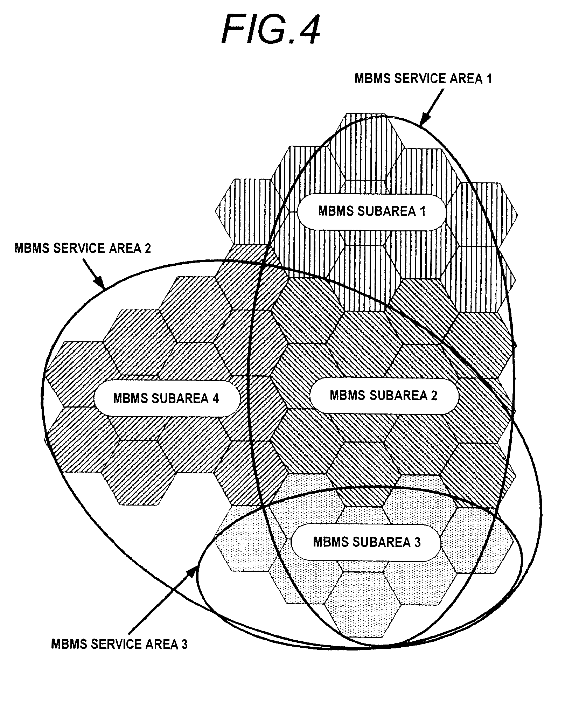

FIG. 4 shows the area organization of MBMS data transmission according to Embodiment 1 of the invention.

As shown in FIG. 4, an MBMS subarea including one or more cells is defined as the minimum unit for performing SFN combining, and each MBMS service area is formed in the MBMS subarea units. Each MBMS subarea can belong to a plurality of MBMS service areas. Accordingly, it is made possible to transmit MBMS SB so that MBMS SB can be subjected to SFN combining in the MBMS subarea units.

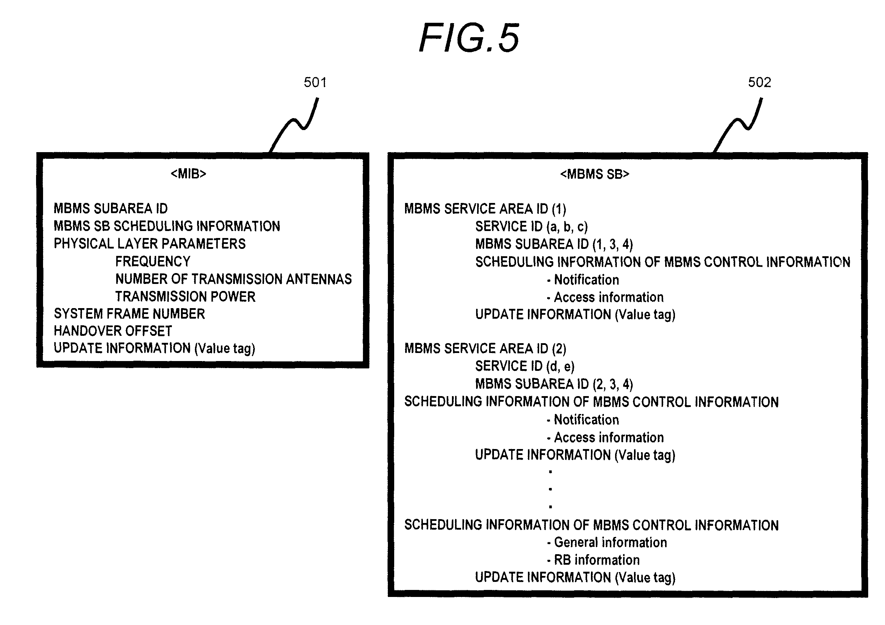

FIG. 5 shows the message constructions of MIB and MBMS SB according to Embodiment 1 of the invention. As shown in FIG. 5, notification of MBMS subarea ID in addition to MBMS SB scheduling information, etc., is provided using MIB 501. Notification of a list of MBMS subarea IDs forming the service area in addition to MBMS service ID, scheduling information of MBMS control information, etc., is provided using MBMS SB 502. MBMS SB 502 is constructed so as to become common in subareas and thus can be transmitted so that MBMS SB 502 can be subjected to SFN combining in the MBMS subarea. Upon reception of MIB 501 and MBMS SB 502, the terminal acquires the MBMS subarea ID and the MBMS service area ID of the own subarea where the terminal exists and the MBMS subarea IDs contained in the same MBMS service area.

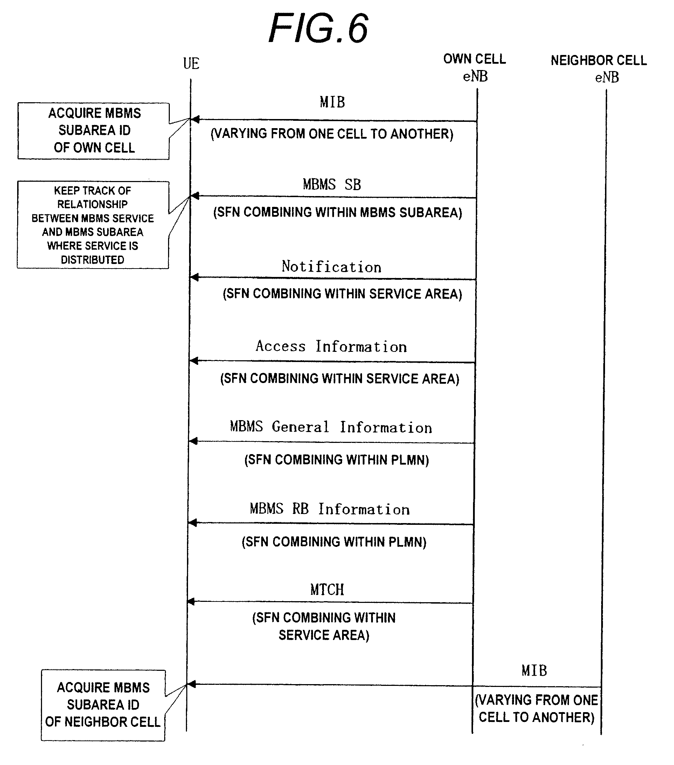

A flow for the terminal to receive MBMS relevant information in Embodiment 1 will be discussed with FIG. 6. The terminal receives the MIB of the own cell (serving cell) to which the terminal belongs through a broadcast channel (BCH) and acquires the MBMS subarea ID of the own cell and then receives MBMS SB through a downlink shared channel (DL-SCH)) and acquires information of the MBMS service distributed in the MBMS subarea to which the own cell belongs and information of other MBMS subareas where the same MBMS service is distributed. At this time, MBMS SB is subjected to SFN combining in the MBMS subarea. Subsequently, the terminal receives the MBMS control information of Notification to MBMS RB Information through an MBMS point-to-multipoint control channel (MCCH). The terminal receives MBMS content through an MBMS point-to-multipoint traffic channel (MCTH) based on the received information.

If the terminal receives the MIB of the neighbor-cell through the broadcast channel before cell reselection or receives the MIB of the cell of the move destination after cell reselection, the terminal can make a comparison between the MBMS subarea IDs contained in the MIBs of the cell of the move source and the cell of the move destination and can determine whether or not MBMS SB needs to be newly received. By receiving the MIB of the neighbor-cell, the terminal can acquire the ID of the MBMS subarea to which the neighbor-cell belongs and thus can compare the ID with the previously acquired MBMS SB information to know the MBMS service provided in the neighbor-cell.

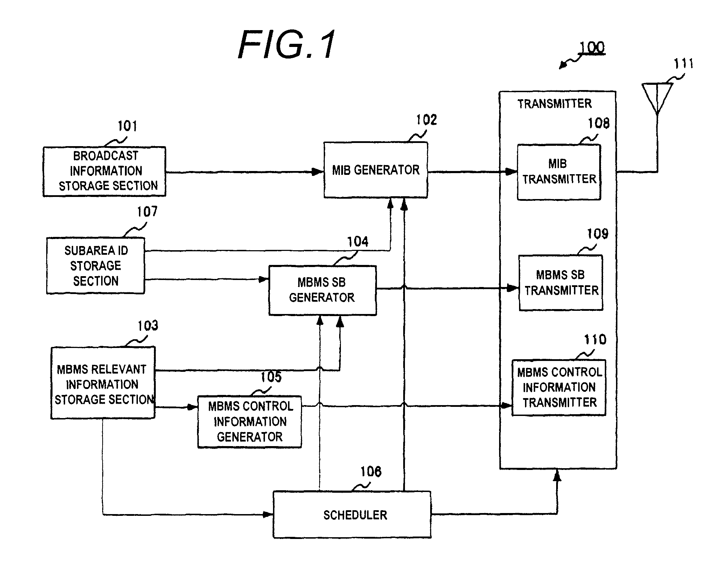

The configuration of a base station apparatus 100 (eNode B) according to Embodiment 1 of the invention will be discussed below with a block diagram of FIG. 1:

A broadcast information storage section 101 stores information relevant to MIB of scheduling information of MBMS scheduling block, physical layer parameters, etc., and outputs the stored MIB relevant information to an MIB generator 102.

An MBMS relevant information storage section 103 stores information relevant to MBMS, such as MBMS service area ID, MBMS service ID, and MBMS control information relevant information and outputs the stored information of the MBMS service area ID, MBMS service ID, etc., to an MBMS SB generator 104 and the MBMS control information relevant information, etc., to an MBMS control information generator 105. The MBMS relevant information storage section 103 also outputs information of the data size, etc., of MBMS control information to a scheduler 106.

A subarea ID storage section 107 stores MBMS subarea IDs, MBMS service area ID, and information of the MBMS subareas corresponding to each MBMS service area. The subarea ID storage section 107 outputs the stored MBMS subarea ID of the subarea to which the own cell belongs, to the MIB generator 102 and outputs the stored MBMS service area ID of the area to which the own cell belongs and the corresponding stored MBMS subarea IDs to the MBMS SB generator 104.

The MBMS control information generator 105 generates MBMS control information of notification information (Notification), Access Information, etc., based on the MBMS control information relevant information output from the MBMS relevant information storage section 103 and outputs the generated MBMS control information to an MBMS control information transmitter 110.

The MBMS SB generator 104 generates MBMS SB based on the MBMS relevant information output from the MBMS relevant information storage section 103, MBMS service area ID and the corresponding MBMS subarea IDs output from an area ID database section, and scheduling information of MBMS control information output from the scheduler 106, and outputs the generated MBMS SB to an MBMS SB transmitter 109. The generated MBMS BS contains all MBMS subarea IDs for each MBMS service area.

The MIB generator 102 generates MIB based on the MIB relevant information output from the broadcast information storage section 101, the MBMS service area ID output from the subarea ID storage section 107, and MBMS SB scheduling information output from the scheduler 106, and outputs the generated MIB to an MIB transmitter 108. The generated MIB contains the MBMS subarea ID.

The scheduler 106 acquires the information of the data size, etc., of MBMS control information output from the MBMS relevant information storage section 103 and determines scheduling information of MBMS control information based on the information. The determined scheduling information of MBMS control information is output to the MBMS SB generator 104. The scheduling information of MBMS control information is output to the MBMS SB generator 104 and the MBMS control information transmitter 110, the MBMS SB scheduling information is output to the MIB generator 102 and the MBMS SB transmitter 109, and the MIB scheduling information is output to the MIB transmitter 108.

The MIB transmitter 108 transmits the MIB output from the MIB generator 102 in accordance with the scheduling information output from the scheduler 106. The MBMS SB transmitter 109 transmits the MBMS SB output from the MBMS SB generator 104 in accordance with the scheduling information output from the scheduler 106. The MBMS control information transmitter 110 transmits the MBMS control information output from the MBMS control information generator 105 through an antenna 111 in accordance with the scheduling information output from the scheduler 106.

The base station apparatus 100 receives MBMS data through the network from a broadcast multicast service center (BMSC) for generating MBMS data. Further, the base station apparatus 100 transmits the MBMS data received through the network to one or more terminals from an MBMS data transmitter not shown through MTCH.

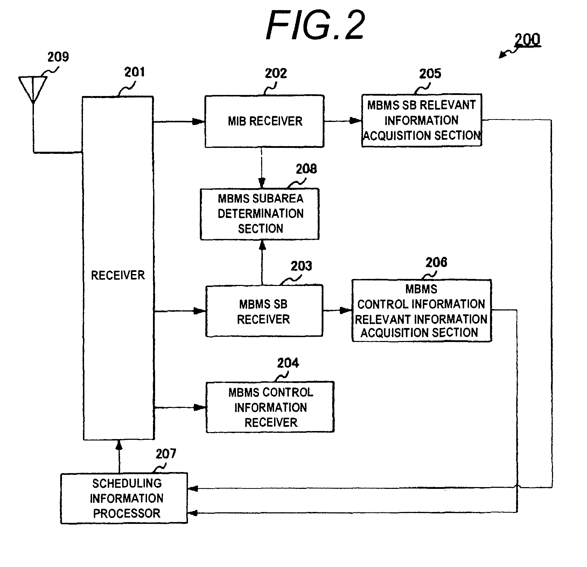

Next, the configuration of a terminal 200 (UE) according to Embodiment 1 of the invention will be discussed with a block diagram of FIG. 2.

A receiver 201 receives a signal from the base station apparatus and outputs MIB, MBMS SB, and MBMS control information of the received signal to an MIB receiver 202, an MBMS SB receiver 203, and an MBMS control information receiver 204 respectively.

The MIB receiver 202 receives the MIB output from the receiver 201 and outputs MBMS SB scheduling information, etc., to an MBMS SB relevant information acquisition section 205. The MIB receiver 202 also extracts the MBMS subarea IDs and outputs the IDs to an MBMS subarea determination section 208.

The MBMS SB receiver 203 receives the MBMS SB output from the receiver 201 and outputs scheduling information, etc., of MBMS control information to an MBMS control information relevant information acquisition section 206. The MBMS SB receiver 203 also extracts the MBMS subarea IDs contained for each MBMS service area and outputs the IDs to the MBMS subarea determination section 208.

The MBMS SB relevant information acquisition section 205 outputs the MBMS SB scheduling information to a scheduler 207 from the MBMS SB relevant information output from the MIB receiver 202.

The MBMS control information relevant information acquisition section 206 outputs the scheduling information of MBMS control information to the scheduling information processor 207 from the MBMS control information relevant information output from the MBMS SB receiver 203.

The scheduling information processor 207 determines the reception schedule of the terminal based on the MBMS SB scheduling information output from the MBMS SB relevant information acquisition section 205 and the scheduling information of MBMS control information output from the MBMS control information relevant information acquisition section 206. The determined reception schedule is output to the receiver 201.

The MBMS subarea determination section 208 makes a comparison between the MBMS subarea ID of the neighbor-cell output from the MIB receiver 202 and the MBMS subarea ID for each MBMS service area output from the MBMS SB receiver 203 and determines whether or not the MBMS subarea of the neighbor-cell is contained in the MBMS service area providing the currently received MBMS service.

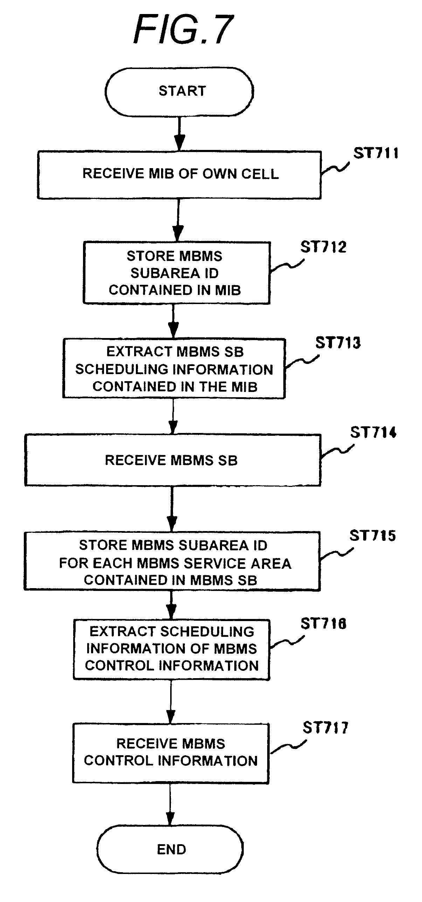

FIG. 7 is a flowchart to show the operation to MBMS control information reception in the terminal 200 according to Embodiment 1 of the invention. The MBMS control information reception operation of the terminal 200 will be discussed below with FIGs. 2 and 7: In the description and the drawings to follow, each step is abbreviated as "ST."

At ST711, the MIB of the own cell (servicing cell) received in the receiver 201 is output to the MIB receiver 202. At ST712, the MIB receiver 202 extracts and stores the MBMS subarea ID contained in the MIB. At ST713, the MBMS SB relevant information acquisition section 205 extracts the MBMS SB relevant information in the information contained in the MIB output from the MIB receiver 202. The MBMS SB scheduling information in the MBMS SB relevant information extracted in the MBMS SB relevant information acquisition section 205 is output to the scheduling information processor 207.

At ST714, the MBMS SB received in the receiver 201 is output to the MBMS SB receiver 203 in accordance with a command from the scheduling information processor 207. At ST715, the MBMS SB receiver 203 extracts and stores the MBMS subarea IDs for each MBMS service area contained in the MBMS SB. At ST716, the MBMS control information relevant information acquisition section 206 extracts the MBMS control information relevant information in the information contained in the MBMS SB output from the MBMS SB receiver. Of the MBMS control information relevant information extracted by the MBMS control information relevant information acquisition section 206, the scheduling information of MBMS control information is output to the scheduling information processor 207. At ST717, the MBMS control information received in the receiver 201 is output to the MBMS control information receiver 204 in accordance with a command from the scheduling information processor 207.

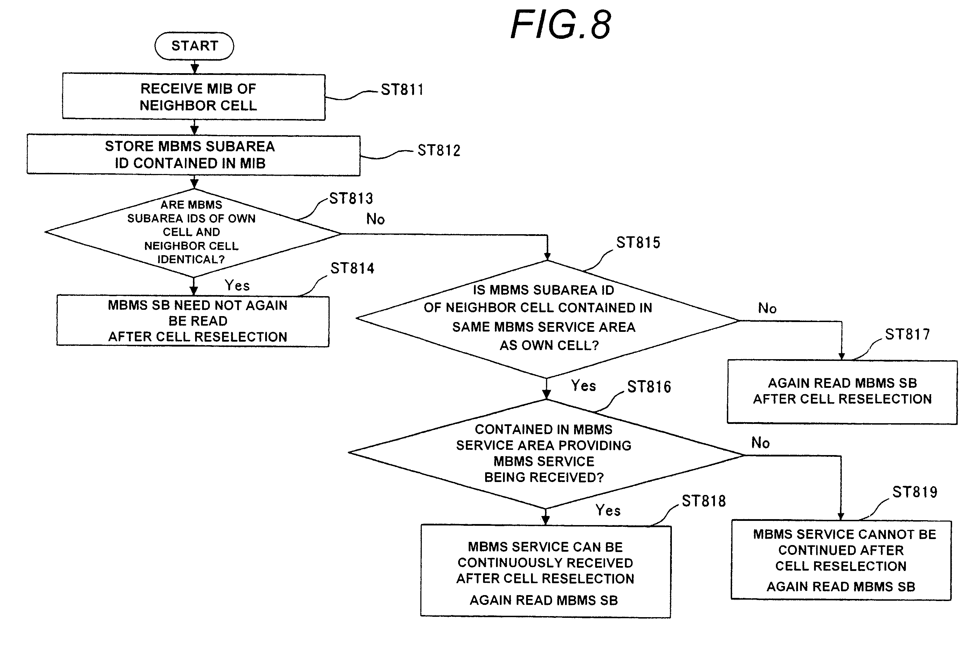

FIG. 8 is a flowchart to show operation of MBMS subarea ID determination of a neighbor-cell in the terminal 200 according to Embodiment 1 of the invention.

At ST811, the MIB of the neighbor-cell received in the receiver 201 is output to the MIB receiver 202. At ST812, the MIB receiver 202 extracts and stores the MBMS subarea ID contained in the MIB. At ST813, the MBMS subarea IDs of the own cell and the neighbor-cell stored in the MIB receiver 202 are output to the MBMS subarea determination section 208. The MBMS subarea determination section 208 compares the two MBMS subarea IDs.

As the determination result of the MBMS subarea determination section 208, if the MBMS subarea IDs of the own cell and the neighbor-cell are identical, the process goes to ST814 and the terminal 200 need not again read the MBMS SB of the neighbor-cell after cell reselection to the neighbor-cell.

As the determination result of the MBMS subarea determination section 208, if the MBMS subarea IDs of the own cell and the neighbor-cell are identical, the process goes to ST815 and the MBMS subarea IDs for each MBMS service area stored in the MBMS SB receiver 203 are output to the MBMS subarea determination section 208. The MBMS subarea determination section 208 makes a comparison between the MBMS subarea ID of the neighbor-cell and the MBMS subarea ID contained in the MBMS service area to which the own cell belongs. As the determination result of the MBMS subarea determination section 208, if the MBMS subarea ID of the neighbor-cell is contained in the same MBMS service area as the own cell, the process goes to ST816. If not contained, the process goes to ST817 and the terminal 200 again reads the MBMS SB of the neighbor-cell after cell reselection to the neighbor-cell.

At ST816, the MBMS subarea determination section 208 determines whether or not the MBMS subarea ID of the neighbor-cell is contained in the MBMS service area providing the MBMS service being received in the own cell. If the MBMS subarea ID is contained in the MBMS service area, the process goes to ST818 and the terminal 200 again reads the MBMS SB after cell reselection. The MBMS service being received can be continuously received. If not contained, the process goes to ST819 and the terminal 200 again reads the MBMS SB after cell reselection. In this case, the MBMS service being received in the own cell is not provided in the neighbor-cell.

An MBMS data receiver not shown of the terminal 200 receives the MBMS data through MTCH. The MBMS data received in a playback section not shown is played back.

As described above, in Embodiment 1, MBMS subareas are defined as area units making up each MBMS service area. The base station apparatus transmits the MIB containing the MBMS subarea ID and the MBMS SB containing all MBMS subarea IDs contained in each MBMS service area. The terminal can know the MBMS subarea ID of the area where the terminal exists by receiving the MIB through the broadcast channel (BCH) and can know the MBMS service area ID of the area to which the own cell belongs and the MBMS subarea IDs contained in the same MBMS service area by receiving the MBMS SB through the downlink shared channel (DL-SCH). The terminal can also know the MBMS service area to which the neighbor-cell belongs by receiving the MIB of the neighbor-cell through the broadcast channel (BCH).

The configuration described above is adopted, whereby it is made possible to transmit the MBMS SB transmitted through the downlink shared channel (DL-SCH) so that MBMS SB can be subjected to SFN combining in the MBMS subarea units. The terminal can keep track of the service status of the neighbor-cell before a cell change and can know whether or not it can continuously receive the currently received service still after a cell change. In this case, one MBMS subarea ID needs only to be added to the MIB, so that change in the MIB can be minimized.

In Embodiment 1, the MBMS SB is subjected to SFN combining in MBMS subarea units, but the SFN combining is not an indispensable component to know the MBMS service area to which the neighbor-cell belongs. If the MBMS SB is transmitted in the cell units without being subjected to SFN combining, the terminal can acquire the MBMS subarea ID of the neighbor-cell and can know whether or not it can also receive the current service being received in the neighbor-cell.

It is also considered that the MIB containing the MBMS subarea ID is transmitted only in the cell of the edge portion of the MBMS subarea. Accordingly, the resource consumption in the whole MBMS subarea can be decreased.

A flow is also possible wherein the terminal receives a scheduling unit 1 (SU-1) next to the MIB and then receives the MBMS SB. The SU-1 contains the cell ID, parameters relevant to access limitation, scheduling information of another scheduling unit, etc., and is transmitted through the downlink shared channel (DL-SCH). In this case, the SU-1 scheduling information is shown and the MBMS SB scheduling information is shown with the SU-1. Accordingly, the information transmitted in the MIB is minimized and the MIB message size can be further reduced.

It is also considered that the MBMS subarea is operated as the same area as a tracking area. Accordingly, a new ID need not be added for the MBMS subarea and the ID of the tracking area can be shared.

In Embodiment 1, the base station apparatus generates the MBMS SB, but the embodiment is not limited to the mode; a radio controller of MCE, etc., may generate and transmit the MBMS SB and to the base station apparatus. The configuration has the advantage that each base station apparatus need not generate the MBMS SB individually.

The invention according to Embodiment 1 provides a radio transmission apparatus including a radio transmitter for providing broadcast service or multicast service for one or more mobile terminals in a service area including one or more cells, wherein the service area is divided into one or more subareas, and a subarea identifier is assigned to each of the subareas, the radio transmission apparatus including: a master information block transmitter for transmitting a master information block including scheduling information of a scheduling block and the subarea identifier of the subarea to which the own cell belongs; and a scheduling block transmitter for transmitting the scheduling block including the identifier of the subarea where the broadcast service or the multicast service is provided.

The radio transmission apparatus described above can notify a radio reception terminal of the service area ID of the area to which the own cell belongs and the subarea ID of each subarea contained in the same service area. Further, the scheduling block can be transmitted so as to be subjected to SFN combining in the subarea units, and a radio reception apparatus can keep track of the service status of the neighbor-cell before a cell change and can know whether or not it can continuously receive the currently received service still after a cell change.

In the radio transmission apparatus described above, further the scheduling block contains the subarea identifier of a subarea neighboring the subarea to which the own cell belongs among the subareas where the broadcast service or the multicast service is provided.

In the radio transmission apparatus described above, the service area ID of the area to which the own cell belongs and the subarea ID of the subarea contained in the same service area can be known. The service area to which the neighbor-cell belongs can be known. Further, particularly if the number of subareas contained in one service area is large, the message size of the scheduling block can be reduced.

The invention according to Embodiment 1 provides a radio transmission method including a radio transmission step for providing broadcast service or multicast service for one or more mobile terminals in a service area including one or more cells, wherein the service area is divided into one or more subareas, and a subarea identifier is assigned to each of the subareas, a master information block transmission step of transmitting a master information block including scheduling information of a scheduling block and the subarea identifier of the subarea to which the own cell belongs; and a scheduling block transmission step of transmitting the scheduling block including the identifier of the subarea where the broadcast service or the multicast service is provided.

The radio transmission method described above can notify a radio reception terminal of the service area ID of the area to which the own cell belongs and the subarea ID of each subarea contained in the same service area. Further, the scheduling block can be transmitted so as to be subjected to SFN combining in the subarea units, and a radio reception method can keep track of the service status of the neighbor-cell before a cell change and can know whether or not the currently received service can be continuously received still after a cell change.

The invention according to Embodiment 1 further provides the radio transmission method adopting the configuration wherein the scheduling block contains the subarea identifier of a subarea neighboring the subarea to which the own cell belongs among the subareas where the broadcast service or the multicast service is provided.

In the radio transmission method described above, the service area ID of the area to which the own cell belongs and the subarea ID of the subarea contained in the same service area can be known. The service area to which the neighbor-cell belongs can be known. Further, particularly if the number of subareas contained in one service area is large, the message size of the scheduling block can be reduced.

### (Embodiment 2)

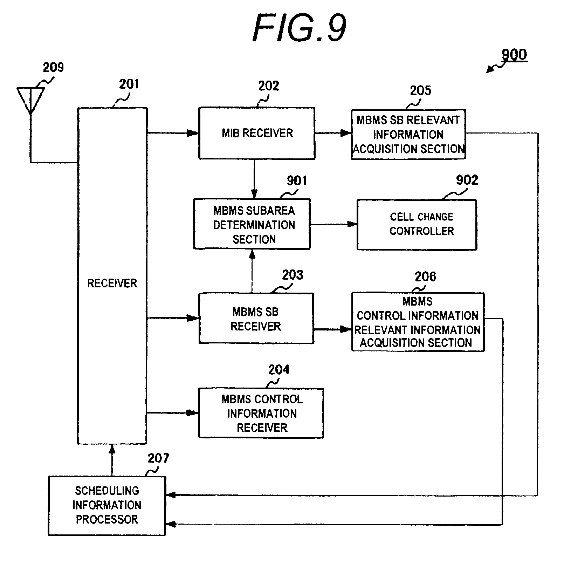

The configuration of a terminal 900 according to Embodiment 2 of the invention will be discussed below with a block diagram of FIG. 9:

It is assumed that the terminal makes a comparison between the MBMS subarea to which the own cell belongs and the MBMS subarea to which the neighbor-cell of the move destination belongs before making cell reselection. An MBMS subarea determination section 901 makes a comparison among the MBMS subarea ID contained in the MIB of the neighbor-cell output from an MIB receiver 202, the MBMS subarea ID contained in the MIB of the own cell, and the MBMS subarea ID for each MBMS service area contained in MBMS SB, and outputs the result to a cell change controller 902.

The cell change controller 902 controls a cell change of a terminal in accordance with the output result from the MBMS subarea determination section 901. If the MBMS subarea IDs of the own cell and the neighbor-cell are identical, the cell change controller 902 continues cell reselection. If the MBMS subarea ID of the neighbor-cell is contained in the MBMS service area providing the MBMS service being received, the cell change controller 902 continues cell reselection. If the MBMS subarea ID of the neighbor-cell is not contained in the MBMS service area providing the MBMS service being received or is not contained in the same MBMS service area as the own cell, the cell change controller 902 suppresses cell reselection. That is, the cell change controller 902 commands the terminal 900 to continue receiving the signal from the own cell without switching to the neighbor-cell so as to remain in the current cell as much as possible without making cell reselection. If cell reselection cannot be canceled, the user is warned of the fact in such a manner that a message indicating that it becomes impossible to continue the current service being received after a cell change is displayed on a screen, that a warning tone is produced, or that the terminal vibrates.

As described above, in Embodiment 2, when the terminal makes cell reselection, a comparison is made between the MBMS subarea IDs of the own cell and the neighbor-cell and control responsive to the result is performed.

The configuration described above is adopted, whereby if the terminal can continuously receive the current service being received still after a cell change, cell reselection is performed; if it becomes impossible to receive the current service being received after a cell change, the terminal sets a large difference between the reception quality measurement values of the own cell and the neighbor-cell for determining cell reselection so as to skip cell reselection as much as possible. A measure can also be taken to warn the user, etc.

In Embodiment 2, the MBMS SB is subjected to SFN combining in MBMS subarea units, but the SFN combining is not an indispensable component to know the MBMS service area to which the neighbor-cell belongs. If the MBMS SB is transmitted in the cell units without being subjected to SFN combining, the terminal can acquire the MBMS subarea ID of the neighbor-cell and can know whether or not the current service being received can be also received in the neighbor-cell.

The invention according to Embodiment 2 provides a radio reception method including a radio reception step for receiving broadcast service or multicast service provided for one or more mobile terminals in a service area including one or more cells, wherein the service area is divided into one or more subareas, and a subarea identifier is assigned to each of the subareas, a master information block reception step of receiving a master information block including scheduling information of a scheduling block and the subarea identifier of the subarea to which the own cell belongs; and a scheduling block reception step of receiving the scheduling block including the identifier of the subarea where the broadcast service or the multicast service is provided.

The radio reception method described above can keep track of the service status of the neighbor-cell before a cell change and can know whether or not the currently received service can be continuously received still after a cell change.

The invention according to Embodiment 2 further provides the radio reception method including a subarea identifier storage step of extracting and storing the subarea identifier from the received master information block of neighbor-cell and a determination step of determining whether or not the neighbor-cell subarea identifier is contained in the scheduling block.

In cell reselection, the radio reception method described above makes it possible to continue receiving the signal from the own cell without switching to the neighbor-cell. If cell reselection cannot be canceled, the user can be warned that it becomes impossible to continue the current service being received after a cell change.

The invention according to Embodiment 2 provides a radio reception method including a radio reception step for receiving broadcast service or multicast service provided for one or more mobile terminals in a service area including one or more cells, wherein the service area is divided into one or more subareas, and a subarea identifier is assigned to each of the subareas, a master information block reception step of receiving a master information block including scheduling information of a scheduling block and the subarea identifier of the subarea to which the own cell belongs; and a scheduling block reception step of receiving the scheduling block including the identifier of the subarea where the broadcast service or the multicast service is provided.

The radio reception method described above can keep track of the service status of the neighbor-cell before a cell change and can know whether or not the currently received service can be continuously received still after a cell change.

The invention according to Embodiment 2 further provides the radio reception method including a cell subarea identifier storage step of extracting and storing the subarea identifier from the received master information block of neighbor-cell and a determination step of determining whether or not the subarea identifier of neighbor-cell is contained in the scheduling block.

In cell reselection, the radio reception method described above makes it possible to continue receiving the signal from the own cell without switching to the neighbor-cell. If cell reselection cannot be canceled, the user can be warned that it becomes impossible to continue the current service being received after a cell change.

### (Embodiment 3)

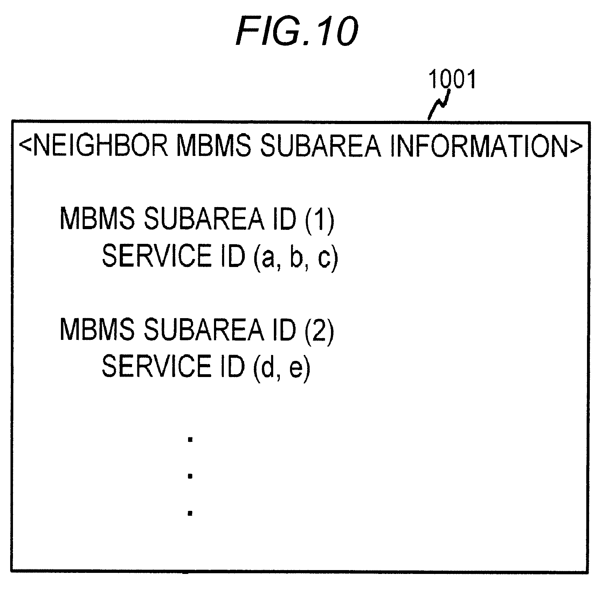

Embodiment 3 of the invention describes a method of providing only the neighbor MBMS subarea ID rather than providing all MBMS subarea IDs contained in an MBMS service area in Embodiment 1. As a method of providing the MBMS subareas contained in the same MBMS service area, a method of generating neighbor MBMS subarea information as one piece of MBMS control information and using the information to provide the MBMS subarea is available. FIG. 10 shows the message construction of the neighbor MBMS subarea information. To provide notification using neighbor MBMS subarea information 1001, the ID of the neighbor MBMS subarea and the MBMS service IDs of MBMS services provided in each MBMS subarea is provided, as shown in FIG. 10.

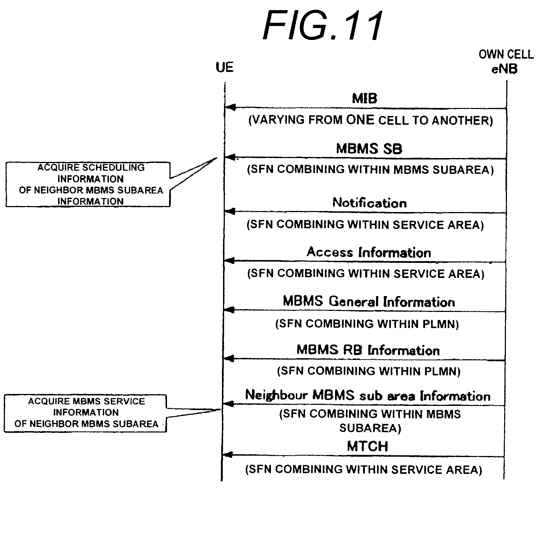

FIG. 11 shows a flow for a terminal to receive MBMS relevant information in Embodiment 3 of the invention. The terminal acquires scheduling information of the neighbor MBMS subarea information according to MBMS SB received through a downlink shared channel (DL-SCH). The terminal receives the neighbor MBMS subarea information in accordance with the acquired scheduling information through an MBMS point-to-multipoint control channel (MCCH). At this time, the neighbor MBMS subarea information is subjected to SFN combining in the MBMS subarea.

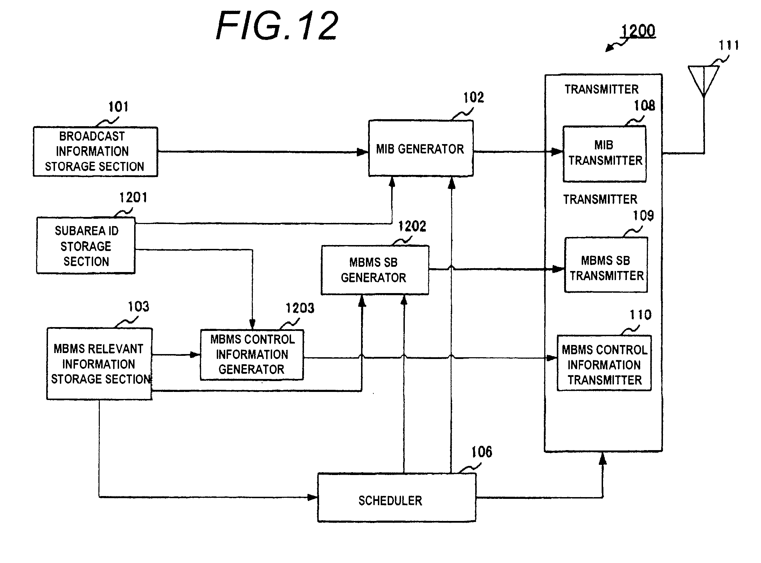

The configuration of a base station apparatus 1200 according to Embodiment 3 of the invention will be discussed below with a block diagram of FIG. 12.

An MBMS relevant information storage section 103 stores information relevant to MBMS, such as MBMS service area ID, MBMS service ID, and MBMS control information relevant information and outputs the stored information of MBMS service area ID, MBMS service ID, etc., to an MBMS SB generator 1202 and the MBMS control information relevant information, etc., to an MBMS control information generator 1203. The MBMS relevant information storage section 103 also outputs information of the type, etc., of MBMS control information to a scheduler 106.

The MBMS SB generator 1202 generates MBMS SB based on the MBMS relevant information output from an MBMS relevant information storage section 103 and scheduling information of MBMS control information output from the scheduler 106, and outputs the generated MBMS SB to an MBMS SB transmitter 109. The generated MBMS BS does not contain any MBMS subarea IDs for each MBMS service area.

The MBMS control information generator 1203 generates MBMS control information based on the MBMS control information relevant information output from the MBMS relevant information storage section 103 and outputs the generated MBMS control information to an MBMS control information transmitter 110. Here, neighbor MBMS subarea information containing the neighbor MBMS subarea ID and the MBMS service IDs of MBMS services provided in each MBMS subarea is generated.

An MIB transmitter 107, the MBMS SB transmitter 109, and the MBMS control information transmitter 110 transmit the MIB output from the MIB generator 102, the MBMS SB output from the MBMS SB generator 1202, and the MBMS control information output from the MBMS control information generator 1203 respectively in accordance with the scheduling information output from the scheduler 106.

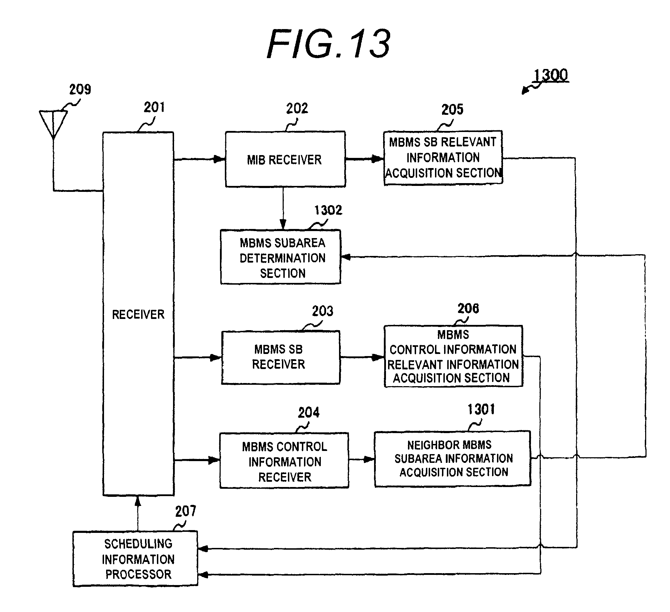

Next, the configuration of a terminal 1300 according to Embodiment 3 of the invention will be discussed with a block diagram of FIG. 13.

An MBMS control information receiver 204 receives MBMS control information output from a receiver 201, extracts neighbor MBMS subarea information from the received MBMS control information, and outputs the neighbor MBMS subarea information to a neighbor MBMS subarea information acquisition section 1301.

The neighbor MBMS subarea information acquisition section 1301 extracts the ID of the neighbor MBMS subarea from the neighbor MBMS subarea information output from the MBMS control information receiver 204 and outputs the ID to an MBMS subarea determination section 1302.

The MBMS subarea determination section 1302 makes a comparison between the MBMS subarea ID of the neighbor-cell output from an MIB receiver 202 and the ID of the neighbor MBMS subarea output from the neighbor MBMS subarea information acquisition section 1301 and determines whether or not the MBMS subarea of the neighbor-cell is contained in the MBMS service area providing the currently received MBMS service.

As described above, in Embodiment 3, the base station apparatus provides the neighbor MBMS subarea providing the same MBMS service using the neighbor MBMS subarea information. Since the MBMS subarea is an area including cells, considering the move speed of the terminal, it is not considered that the terminal passes through the neighbor MBMS subarea and moves to an MBMS subarea ahead of the neighbor MBMS subarea before acquiring the neighbor MBMS subarea information. Therefore, the terminal need not know information of the MBMS subareas contained in the whole MBMS service area and it can be said that there is no problem if the terminal knows the MBMS services provided in the neighbor MBMS subarea.

The configuration described above is adopted, whereby particularly if the number of MBMS subareas contained in one MBMS service area is large, the message size of the MBMS SB can be reduced.

It is also considered that notification of the MBMS services distributed in the neighbor MBMS subarea is provided using the MBMS SB without using the neighbor MBMS subarea information. In this case, only the ID of the neighbor MBMS subarea from among the MBMS subareas contained for each MBMS service area is provided.

It is also considered that the neighbor subarea information is transmitted only in the cell of the edge portion of the MBMS subarea. Accordingly, the resource consumption in the whole MBMS subarea can be decreased.

The invention according to Embodiment 3 provides a radio transmission apparatus including radio transmission means for providing broadcast service or multicast service for one or more mobile terminals in a service area including one or more cells, wherein the service area is divided into one or more subareas, and a subarea identifier is assigned to each of the subareas, master information block transmission means for transmitting a master information block containing scheduling information of a scheduling block and the subarea identifier of the subarea to which the own cell belongs, scheduling block transmission means for transmitting the scheduling block containing the identifier of the subarea where the broadcast service or the multicast service is provided, and control information transmission means for transmitting control information, wherein the control information includes the subarea identifier of a subarea neighboring the subarea to which the own cell belongs and the service identifier for identifying the service provided in the subarea in the subareas where the broadcast service or the multicast service is provided.

The radio transmission apparatus described above can know the service area ID of the area to which the own cell belongs and the subarea ID of each subarea contained in the same service area. The appratus can also know the service area to which the neighbor-cell belongs. Further, particularly if the number of subareas contained in one service area is large, the message size of the scheduling block can be reduced.

The invention according to Embodiment 3 provides a radio transmission method including a radio transmission step for providing broadcast service or multicast service for one or more mobile terminals in a service area including one or more cells, wherein the service area is divided into one or more subareas, and a subarea identifier is assigned to each of the subareas, a master information block transmission step of transmitting a master information block containing scheduling information of a scheduling block and the subarea identifier of the subarea to which the own cell belongs, a scheduling block transmission step of transmitting the scheduling block containing the identifier of the subarea where the broadcast service or the multicast service is provided, and a control information transmission step of transmitting control information, wherein the control information includes the subarea identifier of a subarea neighboring the subarea to which the own cell belongs and the service identifier for identifying the service provided in the subarea in the subareas where the broadcast service or the multicast service is provided.

The radio transmission method described above can know the service area ID of the area to which the own cell belongs and the subarea ID of each subarea contained in the same service area. The method can also know the service area to which the neighbor-cell belongs. Further, particularly if the number of subareas contained in one service area is large, the message size of the scheduling block can be reduced.

### (Embodiment 4)

In Embodiment 4 of the invention, if MBMS service distribution to an MBMS subarea where there is no user who wants to receive the corresponding MBMS service is stopped according to the result of counting performed by a base station apparatus (eNB) to check the presence or absence of the user in each area, it is made possible to transmit Notification so that Notification can be subjected to SFN combining in MBMS service area units as only MBMS SB is changed.

The counting is performed by the base station apparatus to check the presence or absence of a terminal wanting to receive MBMS service in an area (cell, MBMS subarea, MBMS service area, etc.). A counting request transmitter not shown of the base station apparatus transmits a counting request (Counting Request) to each terminal in the area, and a counting response transmitter not shown of the terminal receiving the counting request returns a counting response (Counting Response) to the base station apparatus if the terminal wants to receive the corresponding MBMS service. Accordingly, a counting response receiver not shown of the base station apparatus receives the counting response and a counting section not shown checks and determines the presence or absence of the terminal wanting to receive the MBMS service in the area.

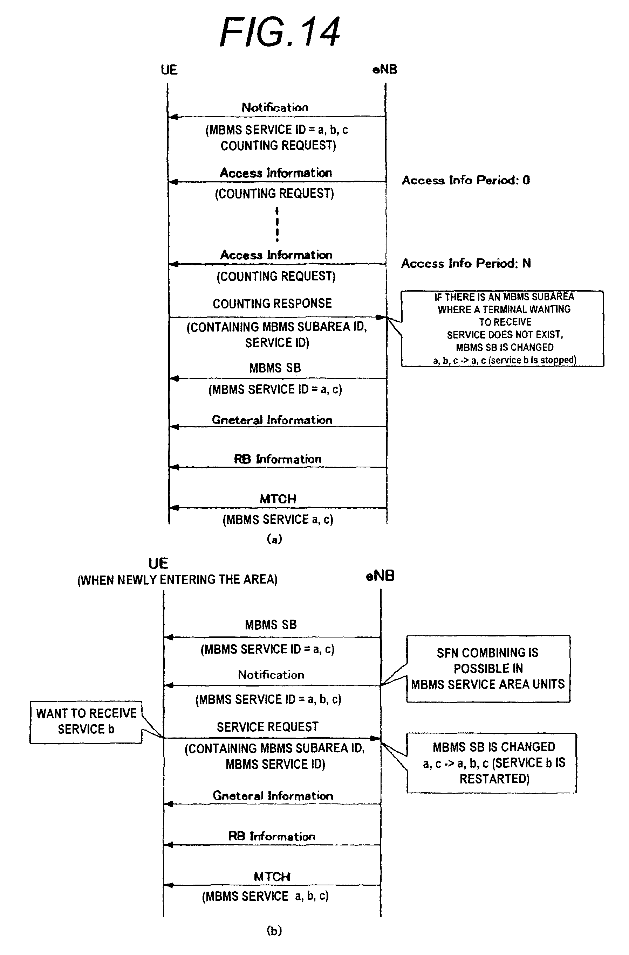

FIG. 14 describes a signaling flow of the base station apparatus and each terminal at the counting time according to Embodiment 4 of the invention. The operation of the base station apparatus and the terminal at the counting time will be discussed below with FIG. 14:

As shown in (a) of FIG. 14, the base station apparatus transmits notification information (Notification) to the terminal, thereby making a counting request. Upon reception of the counting request from the base station apparatus, the terminal receives access information containing information of the ID of the MBMS service for which counting is required, a probability factor of a parameter indicating how long the counting is to be performed, the state of the terminal for which the counting needs to be performed, etc.; if there is MBMS service that the terminal wants to receive, the terminal transmits a counting response to the base station apparatus. The counting response contains the MBMS subarea ID where the terminal exists at present and the MBMS service ID to be received. The Access Information is transmitted first so that it can be subjected to SFN combining in the MBMS service area units; transmission of the Access Information is stopped from the MBMS subarea where the number of received counting responses reaches a threshold value, whereby SFN combining is performed in the MBMS subarea units. At this time, if there is an MBMS subarea to which no counting response is returned, it is assumed that a terminal wanting to receive the corresponding MBMS service does not exist in the MBMS subarea, and distribution of the MBMS service is stopped. For the MBMS service whose distribution is stopped, the MBMS service ID is deleted from the MBMS SB of the corresponding MBMS subarea and only the MBMS service ID of the MBMS service distributed at present (namely, active service or service in an on state) remains. Notification of stopping distribution of the MBMS service is also provided for the neighbor MBMS subarea. In the neighbor MBMS subarea, the corresponding MBMS service ID of the corresponding MBMS subarea contained in the neighbor MBMS subarea information is deleted.

Next, as shown in (b) of FIG. 14, a terminal newly entering the corresponding MBMS subarea first receives MBMS SB. In the MBMS SB, a notification of the MBMS service ID of the MBMS service distributed in the subarea at present is provided. Next, the terminal receives Notification. The Notification is transmitted to be subjected to SFN combining in the MBMS subarea units and provides notification of the MBMS service IDs of all MBMS services provided in the MBMS service area. The terminal makes a comparison between the Notification and the MBMS SB; if the MBMS service that can be received in the MBMS service area where the terminal exists (indicated in the Notification) is not distributed in the MBMS subarea where the terminal exists at present (indicated in the MBMS SB), the terminal can transmit a service request to the base station apparatus. The service request contains the MBMS subarea ID and the MBMS service ID of the MBMS service to be requested. Upon reception of the service request from the terminal, the base station apparatus restarts distribution of the requested MBMS service.

As described above, in Embodiment 4, if MBMS service distribution to the MBMS subarea where there is no user who wants to receive the corresponding MBMS service is stopped according to the result of the counting, the MBMS SB provides notification of only the MBMS service ID of the MBMS service distributed at present, and the Notification provides notification of the MBMS service IDs of all MBMS services that can be provided in the MBMS service area.

The configuration described above is adopted, whereby if the MBMS service being distributed for each MBMS subarea changes in the same MBMS service area according to the counting, it is made possible to perform SFN combining of the Notification in the MBMS service area units and the Notification can be provided efficiently.

It is also considered that not only the base station apparatus, but also MCE performs management of the counting and message change of the MBMS SB. Accordingly, processing in a wide area such as an MBMS service area can be performed collectively.

### (Embodiment 5)

In Embodiment 1, if an MBMS subarea contains an indoor area (indoor cell, indoor area, etc.,) where MBSFN reception is impossible, it is considered that reception of MBMS data may be interrupted while a terminal is moving. Then, MBMS data needs to be transmitted by switching to SC-PTM (Single Cell point-to-multipoint) so that if a terminal receiving MBMS data in a cell (which will be hereinafter referred to as macrocell in the embodiment) moves to an indoor area, the terminal can continue receiving the MBMS data. As an example of the indoor area, the inside of a building, etc., an underground shopping center, a tunnel, a subway, a Closed Subscriber Group (CSG) cell, etc., can be named. For example, Inbuilding Mobile Communication System (IMCS: Registered trademark) of a mobile communication system in a building, etc., exists as a base station installed in an indoor area (which will be hereinafter referred to as indoor base station).

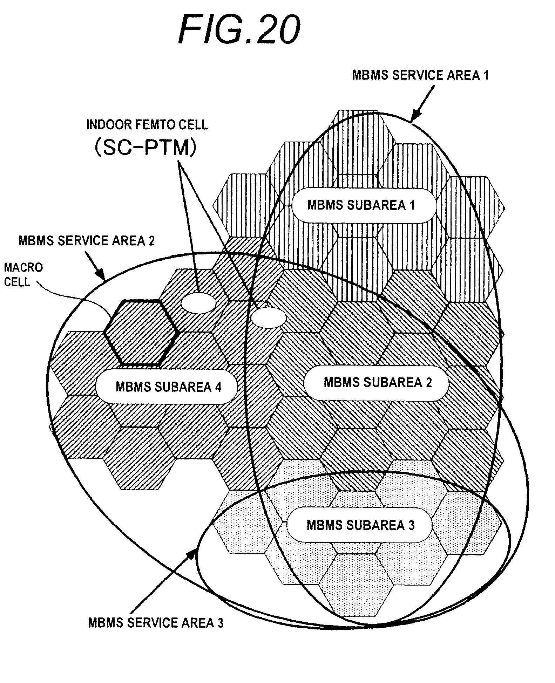

FIG. 20 is an area conceptual diagram of macrocells and indoor cells. In FIG. 20, it is assumed that an indoor area is smaller than a macrocell and may be completely contained in the area of one macrocell or may be across two or more macrocells. In FIG. 20, it is assumed that MBSFN reception cannot be performed in the indoor area.

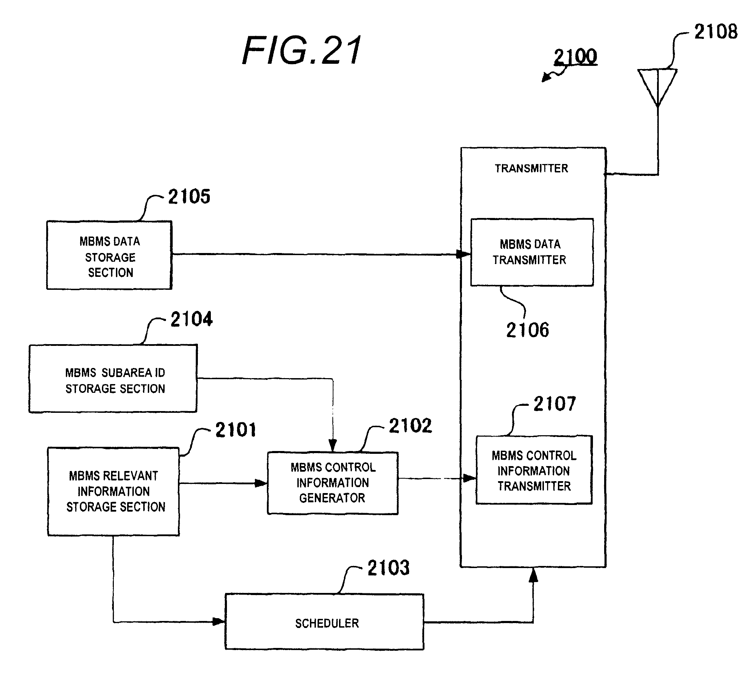

FIG. 21 is a block diagram to show the configuration of an indoor base station apparatus according to Embodiment 5 of the invention.
An MBMS relevant information storage section 2101 stores information relevant to MBMS, such as MBMS service ID, MBMS session ID, and scheduling information of MBMS data and outputs the stored information of the MBMS service ID, etc., to an MBMS control information generator 2102. The MBMS relevant information storage section 2101 also outputs information of the data sizes, etc., of MBMS control information and MBMS data to a scheduler 2103.

An MBMS subarea ID storage section 2104 stores information of the MBMS subarea to which the indoor area belongs. The stored MBMS subarea ID is output to the MBMS control information generator 2102.

The MBMS control information generator 2102 generates MBMS control information based on the MBMS control information relevant information output from the MBMS relevant information storage section 2101 and the MBMS subarea ID output from the MBMS subarea ID storage section 2104, and outputs the generated MBMS control information to an MBMS control information transmitter 2107.

An MBMS data storage section 2105 stores the MBMS data that can be transmitted in the indoor area and outputs the stored MBMS data to an MBMS data transmitter 2106.

The scheduler 2103 acquires the information of the data sizes, etc., of MBMS control information and MBMS data output from the MBMS relevant information storage section 2101 and determines scheduling information of the MBMS control information and the MBMS data. The determined scheduling information of the MBMS control information and the MBMS data is output to a transmitter.

The MBMS control information transmitter 2107 transmits the MBMS control information output from the MBMS control information generator 2102 through an antenna 2108 in accordance with the scheduling information output from the scheduler 2103. The MBMS data transmitter 2106 transmits the MBMS data output from the MBMS data storage section 2105 through the antenna 2108 in accordance with the scheduling information output from the scheduler 2103.

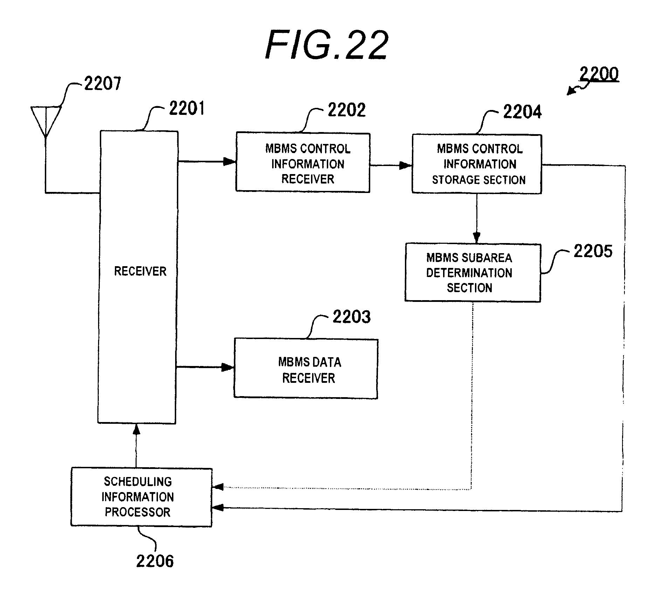

FIG. 22 is a block diagram to show the configuration of a terminal according to Embodiment 5 of the invention.

A receiver 2201 receives a signal transmitted from a base station apparatus in a macrocell and an indoor area through an antenna 2207 and outputs MBMS control information and MBMS data of the received signal to an MBMS control information receiver 2202 and an MBMS data acquisition section 2203 respectively.

The MBMS control information receiver 2202 outputs the MBMS control information relevant information output from the receiver 2201 to an MBMS control information storage section 2204.

The MBMS control information storage section 2204 outputs the MBMS subarea ID and scheduling information of the MBMS control information and the MBMS data of the MBMS control information relevant information output from the MBMS control information receiver 2202 to an MBMS subarea determination section 2205 and a scheduling information processor 2206 respectively.

The MBMS subarea determination section 2205 determines whether or not the MBMS service area providing the currently received MBMS service contains an MBMS subarea of a neighbor macrocell and whether or not the MBMS subarea to which the indoor area belongs is the same as the MBMS subarea to which the macrocell where the terminal immediately before existed belongs, based on the MBMS subarea ID output from the MBMS control information storage section 2204. The MBMS subarea determination section 2205 outputs the determination result to the scheduling information processor 2206.

The scheduling information processor 2206 determines a reception schedule of the terminal based on the scheduling information of the MBMS control information and the MBMS data output from the MBMS control information storage section 2204 and the determination result output from the MBMS subarea determination section 2205. The determined reception schedule is output to the receiver 2201.

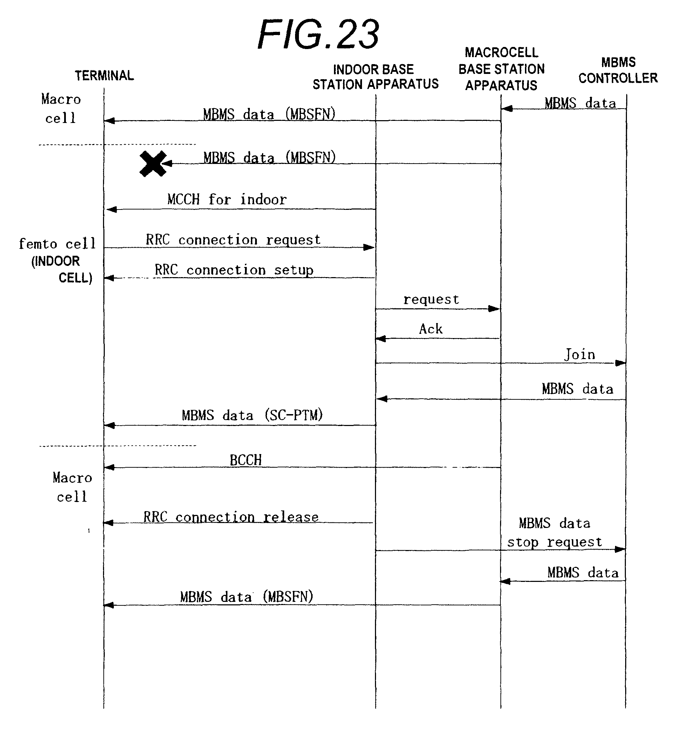

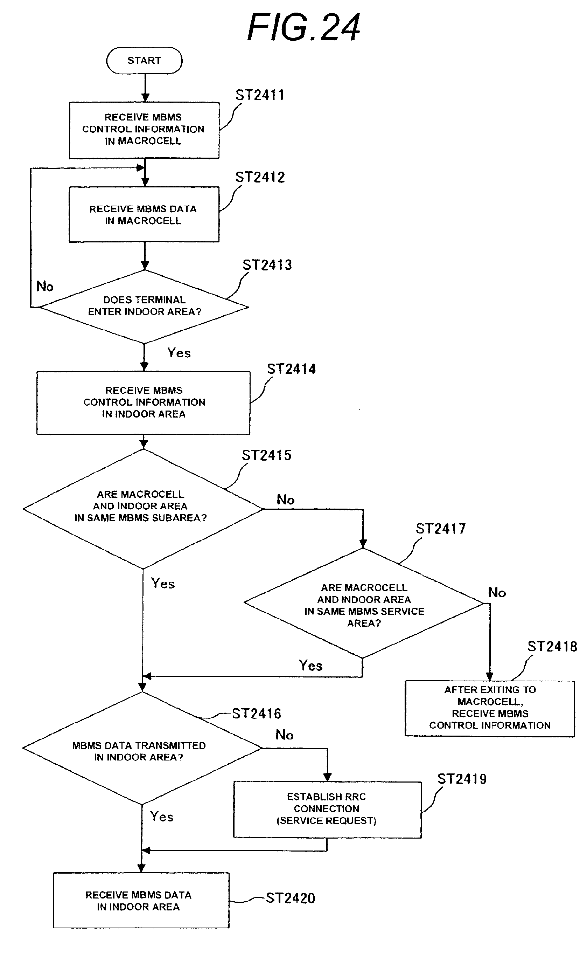

FIG. 23 is a sequence chart of the indoor base station apparatus and the terminal according to Embodiment 5 of the invention. FIG. 24 is a flowchart to show the operation to reception of MBMS data in an indoor area in the terminal according to Embodiment 5 of the invention. FIG. 23 is a sequence chart applied when the indoor area is in the same MBMS subarea as the macrocell and MBMS data is not transmitted in the indoor area.

The terminal receives MBMS control information from the base station apparatus in the macrocell (ST2411) and if MBMS service to be received exists, the terminal receives MBMS data in MBSFN (ST2412).

When the terminal enters the indoor area, it becomes impossible for the terminal to receive MBMS data from the base station apparatus in the macrocell (ST2413). At step ST2413, the terminal receives broadcast information from the indoor base station apparatus and recognizes that the terminal enters an area where MBSFN cannot be received, namely, an indoor area from the fact that the broadcast information does not contain the MBMS subarea ID.

Subsequently, the terminal receives MBMS control information for the indoor area (ST2414) and acquires the MBMS subarea ID contained in the information. In this case, if the MBMS subarea of the indoor area is the same as the MBMS subarea containing the macrocell where the terminal immediately before existed (ST2415: Yes, ST2416: Yes), the terminal can reuse the setting for MBMS reception in the macrocell to receive the same MBMS service even in the indoor area. On the other hand, if the indoor area and the macrocell are in the same MBMS service area (ST2417: Yes) although they are not in the same MBMS subarea (ST2415: No), when the MBMS service that the terminal wants to receive is transmitted in the indoor area (ST2416: Yes), the terminal can reuse the setting for MBMS reception in the macrocell to receive the same MBMS service even in the indoor area (ST2420). What MBMS service is transmitted in the indoor area is indicated by the MBMS control information transmitted from the indoor base station apparatus and thus the terminal references the MBMS control information and makes determination at ST2416.

If the MBMS service is not transmitted in the indoor area (ST2416: No), the process makes a transition to service request processing (ST2419). At ST2419, the terminal transmits an RRC connection request message (RRC connection request) to the indoor base station apparatus, establishes RRC connection, and makes a request to transmit the MBMS service. Upon reception of the request from the terminal, the indoor base station apparatus requests an MBMS controller to distribute the MBMS service. Accordingly, it is made possible for the terminal to receive the same MBMS service as in the macrocell in the indoor cell (ST2420).

Then, when the terminal exits the indoor area, the RRC connection with the indoor base station is released (RRC connection release) and MBMS data is again received from the macrocell base station apparatus (MBSFN).

If the indoor area and the macrocell are not in the same MBMS subarea (ST2415: No) and are not in the same MBMS service area (ST2417: No), the terminal cannot receive the MBMS data received immediately before in the macrocell in the indoor area and thus again exits to the macrocell and then receives MBMS control information and MBMS data (ST2418).

As described above, in Embodiment 5, MBMS subarea information is sent to the terminal in the indoor cell, whereby if the indoor area is in the same service area as the macrocell, even if the terminal enters the indoor cell, it can reuse the setting in the macrocell to receive the same MBMS service.

The MBMS control information sent in the indoor cell contains the MBMS subarea ID, the currently transmitted MBMS service in the indoor cell, the MBMS service ID and the session ID of MBMS service that can be provided although not transmitted at present, the ID indicating the resources where MBMS data is sent (MBMS-Radio Network Temporary Identifier (MBMS-RNTI)), scheduling information (time window information) of MBMS data, and the like.

If the indoor area is placed across macrocells belonging to different MBMS subareas, it is also considered that information concerning the MBMS services provided in the two MBMS subareas in the indoor area is sent. At this time, in the indoor area, two MBMS subarea IDs is provided.

If the indoor area belongs completely to either MBMS subarea in the above-described case, it is also considered that only information concerning the MBMS service provided in the MBMS subarea to which the indoor area belongs is sent. In this case, in the indoor area, notification of the MBMS subarea ID of the MBMS subarea to which the indoor area belongs is provided. The MBMS service provided only in the other MBMS subarea cannot be received in the indoor area.

It is also considered that information indicating that the area is an indoor area (one-bit flag, etc.,) is sent in broadcast information of the indoor area. In so doing, the terminal can recognize that the terminal enters an indoor area by receiving the broadcast information of the indoor area, and subsequently can receive MBMS control information of the indoor area for MBMS service reception.

Usually, no MBMS control information is transmitted in the indoor area and it is also considered that the indoor base station apparatus starts to transmit the MBMS control information in response to a request sent from the terminal which wants to receive MBMS service in the indoor area. In this case, when the terminal which wants to receive the MBMS service disappears in the indoor area, namely, exits to a macrocell, the indoor base station apparatus stops transmitting the MBMS control information.

Embodiment 5 shows the case where a macrocell and an indoor cell are mixed by way of example. However, the case is not limited to the indoor area and if a cell where only single cell transmission (SC-PTM) is performed exists in the cells in an MBMS subarea, a similar advantage can also be provided by providing notification of the MBMS subarea ID in SC-PTM.

### (Embodiment 6)

Embodiment 6 will discuss reducing unnecessary service on/off switch by further adding the mobility state of a terminal to the counting determination in Embodiment 4.

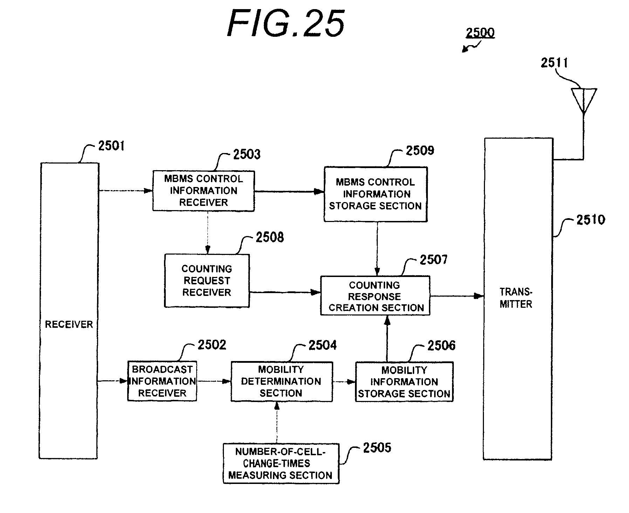

FIG. 25 is a block diagram to show the configuration of a terminal according to Embodiment 6 of the invention.

A receiver 2501 receives broadcast information and MBMS control information from a base station and outputs the broadcast information and the MBMS control information to a broadcast information receiver 2502 and an MBMS control information receiver 2503.

The broadcast information receiver 2502 extracts a parameter required for determining the mobility state from the broadcast information output from the receiver 2501 and outputs the parameter to a mobility determination section 2507.

A number-of-cell change-times measuring section 2505 measures the number of cell change times of the terminal and outputs the result to the mobility determination section 2507.

The mobility determination section 2504 determines the mobility state of the terminal according to how many times the terminal has made a cell change within a specified time based on the parameter output from the broadcast information receiver 2503 and the number of cell change times of the terminal output from the number-of-cell change-times measuring section 2505. The mobility determination section 2504 also outputs the determined mobility state of the terminal to a mobility information storage section 2506.

The mobility information storage section 2506 stores the mobility state of the terminal output from the mobility determination section 2504 and outputs the mobility state to a counting response creation section 2507.
The MBMS control information receiver 2503 receives the MBMS control information output from the receiver 2501 and outputs a counting request to a counting request receiver 2508 and miscellaneous MBMS control information relevant information to an MBMS control information storage section 2509.

The counting request receiver 2508 receives the counting request output from the MBMS control information receiver 2503 and commands the counting response creation section 2507 to create a counting response.

The MBMS control information storage section 2503 outputs information of the MBMS subarea ID, the MBMS service ID, etc., contained in the counting response to the counting response creation section 2507.

The counting response creation section 2507 receives the counting response creation command from the counting request receiver 2508, creates a counting response message containing the information of the MBMS subarea ID, the MBMS service ID, etc., output from the MBMS control information storage section 2509 and information of the mobility state of the terminal output from the mobility information storage section 2506, and outputs the counting response message to a transmitter 2510.

The transmitter 2510 transmits the counting response message output from the counting response creation section 2507 through an antenna 2511.

The mobility state of the terminal contained in the counting response includes three stages of High, Medium, and Normal. The parameters used for determining the mobility state include a parameter indicating the specified time measuring the number of cell change times of the terminal (T_CRMAX) and parameters indicating threshold values of the number of cell change times of the terminal (N_CR_M and N_CR_H). When the terminal has made a cell change N_CR_M times or more within the T_CRMAX time, the mobility state of the terminal becomes Medium; when the terminal has made a cell change N_CR_H times or more, the mobility state of the terminal becomes High. If the number of cell change times is less than N_CR_M, the mobility state of the terminal becomes Normal. However, if the terminal moves between the same two cells, the number of cell change times is not measured as the number of cell change times.
If counting is performed, when a terminal in the High mobility state exists in the neighbor MBMS subarea of the same MBMS service area, transmission of MBMS service is turned on.

As described above, the mobility information of the terminal is contained in the counting response, whereby if there is no terminal which wants to receive MBMS service in one MBMS subarea, when a High-mobility terminal which wants to receive MBMS service exists in the neighbor MBMS subarea and moves to the local MBMS subarea, the macrocell base station apparatus or the MBMS controller continues transmission without turning off transmission of the MBMS service, so that occurrence of unnecessary MBMS service on/off switch can be reduced.

Further, a move history of the terminal is added to the counting response, whereby counting also considering the move direction of the terminal can be performed. For example, it is considered that the ID of the MBMS subarea where the terminal existed in the past is stored and if the mobility state of the terminal is Medium or High, the move history is also contained in the counting response for transmission.

According to the configuration described above, the accuracy of the counting considering the mobility of the terminal can be enhanced and occurrence of unnecessary MBMS service on/off switch can be reduced.

The present invention has been explained in detail with reference to the particular embodiments. However, it is obvious for those skilled in the art that various variations and modifications can be applied without departing from the spirit and the scope of the present invention.

This application is based upon and claims the benefit of priorities of Japanese Patent Applications No. 2007-161069 filed on June 19, 2007 and No. 2008-89890 filed on March 31, 2008, the contents of which are incorporated herein by reference in its entirety.

### Industrial Applicability

The radio transmission method, the radio reception method, the radio transmission-reception method, the radio transmission apparatus, the radio reception apparatus, the radio transmission-reception system, the communication base station apparatus, the radio communication terminal, the radio transmission method, and the radio reception method according to the invention enable the terminal to efficiently acquire the multicast, broadcast service status of the neighbor-cell before the terminal makes a cell change, and can be applied to a mobile communication system, for example.

## Claims

1. A radio transmission method for providing broadcast service or multicast service for one or more mobile terminals in a service area including one or more cells,
wherein the service area is divided into one or more subareas and a subarea identifier is assigned to each of the subareas,
wherein the radio transmission method comprises:
a master information block transmission step of transmitting a master information block including scheduling information of a scheduling block and the subarea identifier of the subarea to which the own cell belongs; and
a scheduling block transmission step of transmitting the scheduling block including the identifier of the subarea where the broadcast service or the multicast service is provided.

2. The radio transmission method as claimed in claim 1, wherein the scheduling block contains the subarea identifier of a subarea neighbor to the subarea to which the own cell belongs among the subareas where the broadcast service or the multicast service is provided.

3. The radio transmission method as claimed in claim 1 or 2, wherein a service identifier for identifying the service provided in the subarea is further contained in the scheduling block.

4. The radio transmission method as claimed in claim 1 further comprising a control information transmission step of transmitting control information,
wherein the control information contains:
the subarea identifier of a subarea neighboring the subarea to which the own cell belongs among the subareas where the broadcast service or the multicast service is provided; and
a service identifier for identifying the service provided in the subarea.

5. The radio transmission method as claimed in claim 4, wherein the scheduling block contains a service identifier of only active service.

6. The radio transmission method as claimed in any of claims 1 to 5, further comprising a notification information transmission step of transmitting notification information including service identifiers of all services that can be provided in the service area.

7. The radio transmission method as claimed in any of claims 1 to 6, wherein the scheduling block is subjected to SFN combining for transmission.

8. A radio reception method for receiving broadcast service or multicast service provided for one or more mobile terminals in a service area including one or more cells,
wherein the service area is divided into one or more subareas, and a subarea identifier is assigned to each of the subareas,
wherein the radio reception method comprises:
a master information block reception step of receiving a master information block including scheduling information of a scheduling block and the subarea identifier of the subarea to which the own cell belongs; and
a scheduling block reception step of receiving the scheduling block including the identifier of the subarea where the broadcast service or the multicast service is provided.

9. The radio reception method as claimed in claim 8, further comprising a neighbor-cell master information block reception step of receiving a master reception block of a neighbor-cell including scheduling information of the scheduling block of the neighbor-cell and the subarea identifier of the subarea to which the neighbor-cell belongs.

10. The radio reception method as claimed in claim 9, comprising:
a neighbor-cell subarea identifier storage step of extracting and storing the subarea identifier from the received neighbor-cell master information block; and
a determination step of determining whether or not the neighbor-cell subarea identifier is contained in the scheduling block.

11. The radio reception method as claimed in claim 10, wherein if it is determined in the determination step that the neighbor-cell subarea identifier is not contained in the scheduling block, cell reselection is suppressed.

12. The radio reception method as claimed in claim 10, further comprising a notification step of notifying a user that it becomes impossible to continue the current service being received if it is determined in the determination step that the neighbor-cell subarea identifier is not contained in the scheduling block.

13. A radio transmission-reception method for providing broadcast service or multicast service for one or more mobile terminals in a service area including one or more cells,
wherein the service area is divided into one or more subareas, and a subarea identifier is assigned to each of the subareas,
wherein the radio transmission-reception method comprises:
a master information block transmission step of transmitting a master information block including scheduling information of a scheduling block and the subarea identifier of the subarea to which the own cell belongs;
a scheduling block transmission step of transmitting the scheduling block including the identifier of the subarea where the broadcast service or the multicast service is provided;
a master information block reception step of receiving the master information block including scheduling information of the scheduling block and the subarea identifier of the subarea to which the own cell belongs; and
a scheduling block reception step of receiving the scheduling block including the identifier of the subarea where the broadcast service or the multicast service is provided.

14. A radio transmission apparatus for providing broadcast service or multicast service for one or more mobile terminals in a service area including one or more cells,
wherein the service area is divided into one or more subareas, and a subarea identifier is assigned to each of the subareas,
wherein the radio transmission apparatus comprises:
a master information block transmitter for transmitting a master information block including scheduling information of a scheduling block and the subarea identifier of the subarea to which the own cell belongs; and
a scheduling block transmitter for transmitting the scheduling block including the identifier of the subarea where the broadcast service or the multicast service is provided.

15. The radio transmission apparatus as claimed in claim 14 wherein the scheduling block contains the subarea identifier of a subarea neighboring the subarea to which the own cell belongs among the subareas where the broadcast service or the multicast service is provided.

16. The radio transmission apparatus as claimed in claim 14 or 15, wherein a service identifier for identifying the service provided in the subarea is further contained in the scheduling block.

17. The radio transmission apparatus as claimed in claim 14, further comprising a control information transmitter for transmitting control information,
wherein the control information contains:
the subarea identifier of a subarea neighboring the subarea to which the own cell belongs among the subareas where the broadcast service or the multicast service is provided; and
a service identifier for identifying the service provided in the subarea.

18. The radio transmission apparatus as claimed in claim 17, wherein the scheduling block contains the service identifier of only active service.

19. The radio transmission apparatus as claimed in any of claims 14 to 18, further comprising a notification information transmitter for transmitting notification information including service identifiers of all services that can be provided in the service area.

20. The radio transmission apparatus as claimed in any of claims 14 to 19, wherein the scheduling block is subjected to SFN combining for transmission.

21. A radio reception apparatus for receiving broadcast service or multicast service provided for one or more mobile terminals in a service area including one or more cells,
wherein the service area is divided into one or more subareas, and a subarea identifier is assigned to each of the subareas,
wherein the radio reception apparatus comprises:
a master information block receiver for receiving a master information block including scheduling information of a scheduling block and the subarea identifier of the subarea to which the own cell belongs; and
a scheduling block receiver for receiving the scheduling block including the identifier of the subarea where the broadcast service or the multicast service is provided.

22. The radio reception apparatus as claimed in claim 21, further comprising a neighbor-cell master information block receiver for receiving a master reception block of a neighbor-cell including scheduling information of the scheduling block of the neighbor-cell and the subarea identifier of the subarea to which the neighbor-cell belongs.

23. The radio reception apparatus as claimed in claim 22, comprising:
a neighbor-cell subarea identifier storage section for extracting and storing the subarea identifier from the received neighbor-cell master information block; and
a determination section for determining whether or not the neighbor-cell subarea identifier is contained in the scheduling block.

24. The radio reception apparatus as claimed in claim 23, wherein if it is determined in the determination section that the neighbor-cell subarea identifier is not contained in the scheduling block, cell reselection is suppressed.

25. The radio reception apparatus as claimed in claim 23 wherein the apparatus further comprises a notification section for notifying a user that it becomes impossible to continue the current service being received if it is determined in the determination step that the neighbor-cell subarea identifier is not contained in the scheduling block.

26. A radio transmission-reception system for providing broadcast service or multicast service for one or more mobile terminals in a service area including one or more cells,
wherein the service area is divided into one or more subareas, and a subarea identifier is assigned to each of the subareas,
wherein the radio transmission-reception system comprises:
a master information block transmitter for transmitting a master information block including scheduling information of a scheduling block and the subarea identifier of the subarea to which the own cell belongs;
a scheduling block transmitter for transmitting the scheduling block including the identifier of the subarea where the broadcast service or the multicast service is provided;
a master information block receiver for receiving the master information block including the scheduling information of the scheduling block and the subarea identifier of the subarea to which the own cell belongs; and
a scheduling block receiver for receiving the scheduling block including the identifier of the subarea where the broadcast service or the multicast service is provided.

27. A base station apparatus comprising a radio transmission apparatus as claimed in any of claims 14 to 20.

28. A terminal equipment comprising a radio reception apparatus as claimed in any of claims 21 to 25.
